# EUROPEAN PATENT SPECIFICATION

(11) **EP 2 511 610 B1**
(45) Date of publication and mention of the grant of the patent: **10.02.2016**
(21) Application number: 12163698.9
(22) Date of filing: 11.04.2012
(51) Int. Cl.: F23L 15/04, F23C 7/08

(54) **Solar boiler system**
Solarboilersystem
Système de chaudière solaire

(30) Priority: 11.04.2011 JP 2011086905
(43) Date of publication of application: 17.10.2012
(73) Proprietor: Mitsubishi Hitachi Power Systems, Ltd., Yokohama 220-8401 (JP)
(72) Inventor: Mishima, Nobuyoshi, Tokyo, 100-8220 (JP); Sugiura, Takashi, Tokyo, 100-8220 (JP); Sakakura, Toshihiko, Tokyo, 100-8220 (JP)
(74) Representative: MERH-IP Matias Erny Reichl Hoffmann Patentanwälte PartG mbB

(56) References cited:
- JP-A- 2010 275 997

## Description

### BACKGROUND OF THE INVENTION

### 1. Field of the Invention

The present invention relates to a solar boiler system to which solar thermal energy is applied.

### 2. Description of the Related Art

For example, a solar thermal gas turbine as disclosed in JP-2010-275997-A is used for a thermal power system equipped with a solar heat recovery apparatus. JP-2010-275997-A proposes the following system. A solar-heat receiving unit is installed on the leading end of a tower having a height of approximately 100 m from the ground. Solar light reflected from a large number of reflecting mirrors installed on the ground is collected in the solar-heat receiving unit. High-pressure air supplied from a compressor installed on the ground is superheated with the solar light thus collected, with the result that high-temperature air is produced. This high pressure and high temperature air is made to flow in a high temperature and high pressure expansion turbine installed on the leading end of the above-mentioned tower so that a generator is driven to generate electricity. For this system to superheat air to approximately 900°C, a large number of the reflecting mirrors are needed and an area in which flat mirrors are installed is enormous. Thus, the cost of the solar heat recovery apparatus is increased. Further, the high temperature and high pressure air expansion turbine and the generator are inevitably installed on the tall tower; therefore, there is a problem in that stable operation is difficult. "Development of High Efficiency Solar Heat Power Generation System", Mitsubishi Heavy Industries' Technical Review, Vol. 31, No. 4 (1994-7), P.239-242, discloses an example as below. A mixed gas of helium and xenon is superheated to 1000°C in a solar heat receiving unit by use of solar light collected by a solar heat collector, with the mixed gas thus superheated being supplied to a regeneration gas turbine.

### SUMMARY OF THE INVENTION

The system as the above-mentioned conventional technology is such that solar light is concentrated in the solar heat receiving unit by means of a large number of flat mirrors installed on the ground. The solar light thus concentrated superheats the high-pressure air at the compressor outlet. The high-pressure air thus superheated is supplied to the high temperature and high pressure air expansion turbine. To generate high-temperature air of approximately 1000°C or higher, the system requires a large number of flat mirrors. That is, the above-mentioned conventional technology in which the solar thermal energy is applied to the gas turbine needs to increase air temperature up to 1000°C or higher in order to improve efficiency. Therefore, the conventional technology involves a problem contradictory to the increase in air temperature up to 1000°C or higher in that the installation cost of the solar collector is significantly increased. It should be noted that the above-mentioned conventional technologies do not disclose any application of solar thermal energy to a boiler system.

Accordingly, it is an object of the present invention to provide a solar boiler system that can suppress the installation cost for a solar collector and significantly improve gross thermal efficiency while minimizing an air temperature rise resulting from the collected solar heat.

According to one aspect of the present invention, there is provided a solar heat utilization system according to claim 1.

The present invention can provide a solar boiler system that can suppress the installation cost for a solar collector and significantly improve gross thermal efficiency while minimizing a rise in air temperature resulting from the collected solar heat.

### BRIEF DESCRIPTION OF THE DRAWINGS

Fig. 1 is a diagram for assistance in explaining a system connecting a solar collector, a boiler secondary air superheater and a boiler smoke tunnel system according to an embodiment of the present invention.
Fig. 2 is a detailed diagram for assistance in explaining the solar collector and the secondary air superheater in Fig. 1.
Fig. 3 is a graph of a gross thermal efficiency progress rate (estimation) in the embodiment.

### DESCRIPTION OF THE PREFERRED EMBODIMENTS

An embodiment of a solar boiler system according to the present invention applied to a coal-fired thermal power boiler will hereinafter be described with reference to the drawings. Incidentally, equivalent constituent elements are denoted with like reference numerals throughout all figures.

The embodiment according to the present invention described below includes a smoke wind tunnel of a boiler in a steam power plant; a solar heat recovery apparatus; and a system for inputting solar heat energy recovered by the solar heat recovery apparatus to a boiler furnace via a secondary air superheater. The steam power plant corresponds to one mode of thermal power generation. Incidentally, the solar heat recovery apparatus is described by taking a trough type as an example. However, the same holds true for a tower type. Oil is here used as a heat medium for recovering solar thermal energy. However, the same hold true for other heat media containing water. Further, molten salt is exemplarily used as a heat medium on a side where the recovered solar heat is stored or radiated.

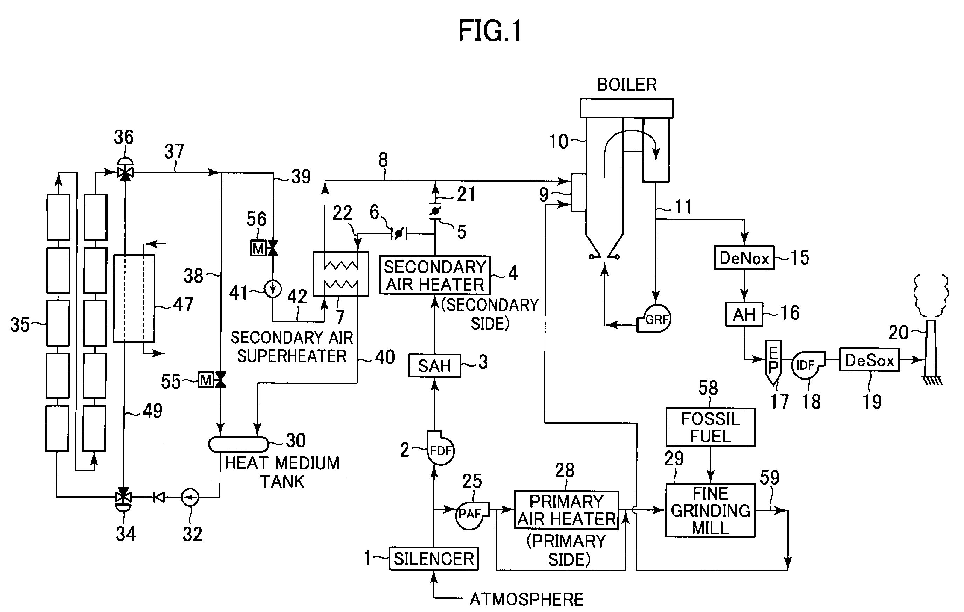

Fig. 1 is a system diagram for assistance in explaining a solar boiler system according to the present embodiment. The solar boiler system of the present embodiment includes, as a basic system, a primary air system for a boiler, a secondary air system for the boiler, a smoke tunnel system for the boiler, and a solar recovery system.

Atmospheric air needed for burning in a boiler 10 passes through a silencer 1 and is divided into primary air and secondary air. The primary air is increased in pressure by a primary air draft fan 25 (PAF) and heated by a primary air heater (a primary air preheater) 28. Thereafter, the heated primary air flows into a fine grinding mill 29 at a subsequent stage. Further, the fine grinding mill 29 pulverizes fossil fuel 58 into fine powder. The pulverized fossil fuel 58 along with the primary air passes through a fine grinding mill outlet pipe 59 and flows into a wind box 9 of the boiler 10. In the wind box 9, the boiler primary air, secondary air and the fine powder fuel pass through corresponding passages of a plurality of combustor burners (not shown). Thereafter, the primary air, the secondary air and the fine powder fuel unite with one another and are burned at fuel combustor burner outlets.

Boiler secondary air is increased in pressure by a forced draft fan 2 (FDF) and is heated with steam by a steam-type air heater 3 (SAH). Thereafter, the heated boiler secondary air flows into a secondary air heater (a secondary air preheater) 4. In the secondary air heater 4, the secondary air is heated to approximately 350°C and passes through a secondary air superheater inlet damper 6. The preheated air for combustion flows through a secondary air superheater inlet duct 22. In addition, in a secondary air superheater 7 the preheated air is further superheated to approximately 400 to 500°C with a heating medium having solar thermal energy. The superheated air passes through a secondary air superheater outlet duct 8 and is led to the wind box 9. In this way, the solar thermal energy is inputted into the boiler 10 via the boiler secondary air. If operation in which solar thermal energy is not recovered in the boiler is performed, a secondary air superheater bypass damper 5 is opened so that the secondary air flows into a secondary air superheater bypass duct 21, thereby leading the secondary air to the wind box 9.

Boiler exhaust gas burnt in the furnace of the boiler 10 passes through a boiler outlet duct 11. Thereafter, the exhaust gas sequentially passes through denitrification equipment 15, a primary and secondary air heater (a primary and secondary air preheater) 16 (AH), an electric dust precipitator 17 (EP), an inductive draft fan 18 (IDF) and a desulfurizer 19 (DeSox) on the subsequent stage. Lastly, the exhaust gas flows into a chimney 20 and diffuses to atmosphere.

After superheating the secondary air to approximately 400 to 500°C, a low-temperature solar heat medium moves out of the secondary superheater 7 and passes through the inside of a secondary air superheater outlet heat medium pipe 40. Thereafter, such solar heat medium is collected in a heat medium tank 30. The low-temperature heat medium having moved out of the heat medium tank 30 is increased in pressure by a primary heat medium circulating pump 32. Then, the low-temperature heat medium passes through a three-way valve 34 located at a solar light collecting mirror group inlet and is led to solar light collecting mirrors 35, where the low-temperature heat medium is heated and becomes a high-temperature heat medium. The high-temperature heat medium, which has heated to as high as approximately 410 to 510° with sunlight, passes through a three-way valve 36 located at a solar light collecting mirror group outlet, a solar heat collector outlet heat medium pipe 37, a secondary air superheater inlet heat medium pipe 39, a secondary air superheater inlet valve 56, a secondary heat medium circulating pump 41 and a secondary heat medium circulating pump outlet heat medium pipe 42. Then, the high-temperature heat medium is led to the secondary superheater 7. The high-temperature heat medium supplied as described above superheats the secondary air to approximately 400 to 500°C, so that the solar thermal energy is brought into the furnace of the boiler. If the heat exchanging operation of the secondary air superheater 7 comes to a stop, control is exercised to close the secondary air superheater inlet valve 56 and to open a secondary air superheater bypass valve 55. As a result, the high-temperature heat medium is diverted to the heat medium tank 30.

The secondary air superheater bypass valve 55 is disposed in a secondary air superheater bypass heat medium pipe 38 connected between the solar heat collector outlet heat medium pipe 37 and the heat medium tank 30. The secondary air superheater bypass heat medium pipe 38 bypasses the secondary air superheater inlet heat medium pipe 39, the secondary air superheater inlet valve 56, the secondary heat medium circulating pump 41, the secondary heat medium circulating pump outlet heat medium pipe 42, the secondary air superheater 7 and the secondary air superheater outlet heat medium pipe 40.

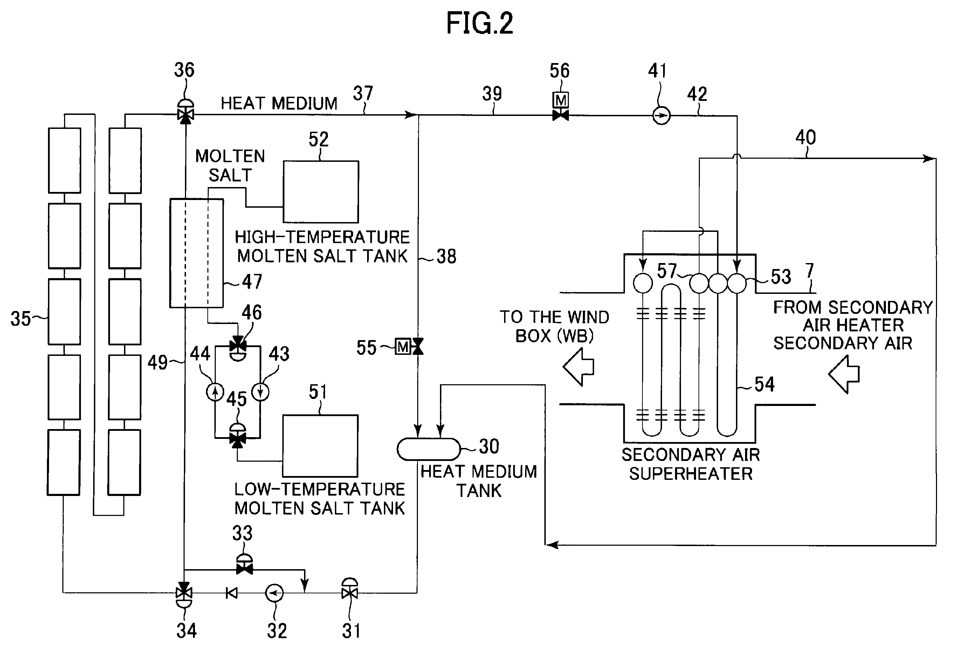

Fig. 2 is a diagram for assistance in explaining a detailed system of the solar heat recovery apparatus and of the secondary air superheater in Fig. 1. More specifically, the solar boiler system is such that solar thermal energy is stored during daylight and a high-temperature heat medium is again supplied to the secondary air superheater 7 during the hours of darkness, i.e., after the sun goes down. Incidentally, a description is given of an example in which molten salt is used as a heat medium for storing solar thermal energy.

Incidentally, solar heat varies largely between day and night. Because of this influence, electric power facilities making use of solar heat has a problem in that the output of a turbine generator varies between day and night. According to the configuration shown in Fig. 2 this problem will be solved.

In daytime operation, first, a heat medium is heated to high temperature with daytime solar thermal energy. Part of the heated heat medium is circulated by use of the three-way valve 36 located at the solar light collecting mirror group outlet, a heat medium supply pipe 49 for heat exchange with molten salt, and a primary heat medium circulating pump inlet valve 33. This inlet valve 33 is installed on an accumulator heat-exchanger side. On the other hand, low-temperature molten salt in a low-temperature molten salt tank 51 is supplied to a molten salt heat exchanger 47 via a low-temperature molten salt tank outlet changeover three-way valve 45, a solar heat-storing molten salt transfer pump 44 and a molten salt heat exchanger inlet changeover three-way valve 46. This low-temperature molten salt is then subjected to heat exchange with the high-temperature medium supplied from the solar light collecting mirror group outlet three-way valve 36. The high-temperature molten salt increased in temperature through this heat exchange is supplied to a high-temperature molten salt tank 52, and thus solar thermal energy is stored.

During nighttime hours, the high-temperature molten salt stored by the heat storage operation during daytime hours is taken out of the high-temperature molten salt tank 52. The high-temperature molten salt thus taken out is used as a medium heating the low-temperature heat medium supplied as a heated medium (heating medium during daytime hours) to the molten salt heat exchanger 47. More specifically, to supply the high-temperature molten salt in the high-temperature molten salt tank 52 to the low-temperature molten salt tank 51, the molten salt heat exchanger inlet changeover three-way valve 46 and the low-temperature molten salt tank outlet changeover three-way valve 45 are switched such that a solar heat radiation molten salt transfer pump 43 is activated. This control allows the solar thermal energy stored in the high-temperature molten salt tank 52 to be radiated to the heat medium.

The high-temperature heat medium heated with the daytime solar thermal energy or the nighttime high-temperature molten salt passes through the secondary air superheater inlet heat medium pipe 39 and the secondary air superheater inlet valve 56 and is increased in pressure by the secondary heat medium circulating pump 41. The high-temperature heat medium thus supplied is collected via the secondary heat medium circulating pump outlet heat medium pipe 42 in a secondary air superheating pipe inlet header 53 installed in the secondary air superheater 7. The high-temperature heat medium supplied to the secondary air superheating pipe inlet header 53 sequentially flows in a secondary air superheater heat-transfer pipe 54 installed in the secondary air superheater 7 toward the downstream side. During this flow, the high-temperature heat medium superheats the secondary air of approximately 350°C at the outlet of the secondary air heater 4 to approximately 400 to 500°C. After superheating the secondary air for burning boiler fossil fuel, the heat medium becomes a low-temperature heat medium. The low-temperature heat medium is collected in a secondary air superheating pipe outlet header 57 installed in the secondary air superheater 7. The low-temperature heat medium moves out of the secondary air superheating pipe outlet header 57, passes through the secondary air superheater outlet low-temperature heat medium pipe 40 and is returned to the heat medium tank 30. The low-temperature heat medium, once again, moves out of the heat medium tank 30, passes through a circulating pump inlet valve 31 and is increased in pressure by the primary heat medium circulating pump 32. The low-temperature heat medium thus increased in pressure is sent to the solar light collecting mirrors 35 or the molten salt heat exchanger 47 and becomes the high-temperature heat medium again. The high-temperature heat medium is returned to the secondary air superheater 7. In this way, the system of the present embodiment is configured so that the heat medium is circulated between the solar light collecting mirrors 35 and the secondary air superheater 7 during daytime hours and is circulated between the molten salt heat exchanger 47 and the secondary air superheater 7 during nighttime hours.

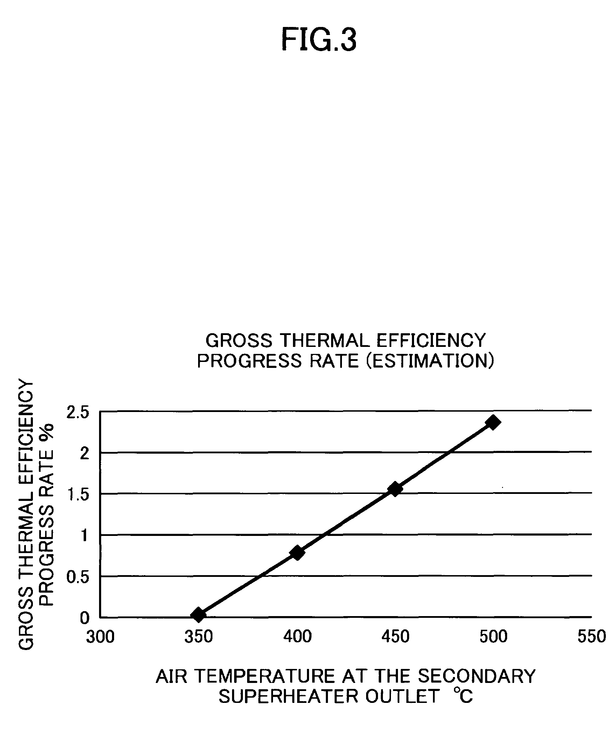

Fig. 3 shows a gross thermal efficiency progress rate (an absolute value) in the present embodiment. A horizontal axis represents air temperatures (°C) at the outlet of the secondary air superheater 7 and a longitudinal axis represents a gross thermal efficiency progress rate. In general, a secondary air temperature at the boiler furnace inlet of a coal-fired thermal power boiler is approximately 350°C. Therefore, an estimation example in Fig. 3 takes a point where air temperature at the second air superheater outlet (the boiler furnace inlet) is approximately 350°C as a reference point of gross thermal efficiency.

In the present embodiment described above, the secondary air superheater 7 allows solar thermal energy to further superheat the secondary air (approximately 350°C) preheated by the secondary air heater 4. For example, if the secondary air of 350°C is superheated up to 400°C by the secondary air superheater 7, the gross thermal efficiency progress rate is increased by about 0.8%. If the secondary air is superheated up to 450°C, the gross thermal efficiency progress rate is increased by about 1.6%. If the secondary air is superheated up to 500°C, the gross thermal efficiency progress rate is increased by about 2.4%. Incidentally, Fig. 3 shows the example in which the secondary air is superheated up to 400 to 500°C by the secondary superheater 7. However, the secondary air may be superheated to over 500°C. In this case, the dimensions of the solar heat recovery apparatus such as the solar light collecting mirrors 35 are increased according to the magnitude in temperature which is increased by the secondary air superheater 7. It is necessary, therefore, to determine the value of temperature to be superheated by the secondary air superheater 7 after the discussion on how much the area of a site at which to install the solar heat recovery apparatus is great.

According to the embodiment described above, it is possible to superheat the Boiler secondary air which is air for combustion of a fossil-fuel-fired boiler to be supplied to the boiler furnace, by using solar thermal energy of which energy cost is free. More specifically, the secondary air having a conventional temperature of approximately 350°C is superheated with solar heat by approximately 50 to 150°C and the resulting secondary air of approximately 400 to 500°C is supplied to the boiler furnace. This can reduce coal heat-input to the boiler for the entire boiler, thereby reducing boiler fuel consumption. As a result, gross thermal efficiency can be improved significantly. General large boilers allows a Ljungstroem air heater to heat air for boiler combustion to approximately 350°C with exhaust gas and the air for boiler combustion thus heated is taken into the boiler. The solar heat recovery apparatus, which is necessary to heat this air by approximately 50 to 150°C with solar heat, can be downsized in comparison with the system configured to superheat air to 1000°C from normal temperature as described in the related art.

Incidentally, the gas turbine system that obtains air of high temperature close to 1000°C from air of common temperature through solar heat is as below. The necessary thermal energy of flat mirrors reflecting and collecting solar heat is enormous. The number of the necessary flat mirrors reaches half a million. In addition, a plane area in which necessary sunlight reflecting mirrors are installed is enormous. On the other hand, the solar boiler system of the present embodiment just needs the number of the flat mirrors that increases the secondary air of approximately 350°C by approximately 50 to 150°C. Thus, the installation cost of the solar heat collector can be suppressed significantly compared with that of the solar gas turbine system.

The system based on the conventional technology described earlier is such that the solar gas turbine and the generator are installed on the place as high as approximately 100 m. Therefore, the solar gas turbine or the generator is likely to be unstable in operation. However, since in the boiler system of the present embodiment it is not necessary to install on the high place a rotating machine such as a generator or the like, system's stable operation can be performed.

Since the solar heat quantity recovered per day varies from morning to evening through daytime, the thermal energy of the secondary air inputted to the boiler furnace varies accordingly. However, the boiler system of the present embodiment can address such variation by regulating the heat quantity of coal inputted to the boiler furnace, i.e., the supply quantity of coal. Even if the recovered solar heat quantity varies, regulating the quantity of fuel inputted to the furnace can minimize variations in steam temperature, in pressure and in quantity of evaporation. Thus, the solar boiler system (the thermal power system) can be provided that can operate such that the output of the turbine generator is constant throughout the day regardless of day or night.

## Claims

1. A solar heat utilization system comprising a solar heat recovery apparatus for collecting solar thermal energy, **characterised in that**
the system further comprises:
a boiler (10) for burning fossil fuel;
a primary air system for pneumatically transporting pulverized fossil fuel to a burner attached to the boiler (10);
a secondary air system for supplying preheated air for combustion to the boiler (10); and
a secondary air superheater (7) provided at the secondary air system, the secondary air superheater (7) further superheating the preheated air for combustion with solar thermal energy collected by the solar heat recovery apparatus.

2. The solar heat utilization system according to claim 1, wherein the primary air system includes:
a primary air draft fan (25) for generating air for transportation which allows pulverized fossil fuel to be pneumatically transported to the boiler (10);
a primary air heater (28) for preheating the air for transportation sent from the primary air draft fan (25);
wherein the secondary air system includes:
a forced draft fan (2) for generating air for combustion of the boiler (10); and
a secondary air heater (4) for preheating the air for combustion sent from the forced draft fan (2); wherein the secondary air superheater (7) is configured to further superheat the air for combustion at an outlet of the secondary air heater (4) by using solar thermal energy collected by the solar heat recovery apparatus as a heat source.

3. The solar heat utilization system according to claim 2,
wherein the solar heat recovery apparatus includes:
a plurality of solar light collecting mirrors (35) for collecting solar light;
a heat exchanger (47) for subjecting a heat medium for heat storage to heat exchange with a heat medium, which is heated with the solar thermal energy collected by the solar light collecting mirrors (35);
a low-temperature tank (51) for storing a low-temperature heat medium for heat storage used for heat exchange in the heat exchanger (47);
a high-temperature tank (52) for storing a high-temperature heat medium for heat storage heated in the heat exchanger (47); and
a changeover valve for switching to allow the heat medium for heat storage to flow to both the low-temperature tank (51) and the high-temperature tank (52).

## Patentansprüche

1. Solarwärmenutzungssystem, das eine Solarwärmegewinnungsvorrichtung zum Sammeln von solarer Wärmeenergie umfasst, **dadurch gekennzeichnet, dass**
das System ferner umfasst:
einen Boiler (10) zum Verbrennen von fossilem Brennstoff;
ein Primärluftsystem zum pneumatischen Befördern von pulverisiertem fossilem Brennstoff zu einem Brenner, der an dem Boiler (10) befestigt ist;
ein Sekundärluftsystem zum Zuführen von vorgewärmter Luft für eine Verbrennung zu dem Boiler (10); und
einen Sekundärluftüberhitzer (7), der an dem Sekundärluftsystem vorgesehen ist, wobei der Sekundärluftüberhitzer (7) ferner die vorgewärmte Luft für die Verbrennung mit solarer Wärmeenergie, die durch die Solarwärmegewinnungsvorrichtung gesammelt wurde, überhitzt.

2. Solarwärmenutzungssystem nach. Anspruch 1, wobei das Primärluftsystem enthält:
ein Primärluftzuggebläse zum Erzeugen von Luft für die Beförderung, die erlaubt, dass pulverisierter fossiler Brennstoff pneumatisch zu dem Boiler (10) befördert wird;
ein Primärluftheizgerät (28) zum Vorwärmen der Luft für die Beförderung, die von dem Primärluftzuggebläse (25) geschickt wurde;
wobei das Sekundärluftsystem enthält:
ein Saugluftgebläse (2) zum Erzeugen von Luft für die Verbrennung des Boilers (10); und
ein Sekundärluftheizgerät (4) zum Vorwärmen der Luft für die Verbrennung, die von dem Saugluftgebläse (2) geschickt wurde; wobei der Sekundärluftüberheizer (7) konfiguriert ist, die Luft für die Verbrennung an einem Auslass des Sekundärluftheizgeräts (4) durch Verwenden von durch die Solarwärmenutzungsvorrichtung gesammelter solarer Wärmeenergie als Wärmequelle zu überhitzen.

3. Solarwärmenutzungssystem nach Anspruch 2,
wobei die Solarwärmegewinnungsvorrichtung enthält:
mehrere Solarlichtsammelspiegel (35) zum Sammeln von Solarlicht;
einen Wärmetauscher (47), um ein Wärmemedium für die Wärmespeicherung einem Wärmeaustausch mit einem Wärmemedium auszusetzen, das mit der durch die Solarlichtsammelspiegel (35) gesammelten solaren Wärmeenergie erwärmt wird;
einen Tank mit geringer Temperatur (51) zum Speichern eines Wärmemediums mit geringer Temperatur für die Wärmespeicherung, das für einen Wärmeaustausch in dem Wärmetauscher (47) verwendet wird;
einen Tank mit hoher Temperatur (52) zum Speichern eines Wärmemediums mit hoher Temperatur für die Wärmespeicherung, das in dem Wärmetauscher (47) erwärmt wird; und
ein Umschaltventil zum Schalten, um zu erlauben, dass das Wärmemedium für die Wärmespeicherung sowohl zu dem Tank mit geringer Temperatur (51) als auch zu dem Tank mit hoher Temperatur (52) strömt.

## Revendications

1. Système d'utilisation de chaleur solaire comprenant un appareil de récupération de chaleur solaire pour collecter de l'énergie thermique solaire,
**caractérisé en ce que** le système comprend en outre :
une chaudière (10) pour faire brûler du combustible fossile ;
un système d'air primaire pour transporter par voie pneumatique du combustible fossile pulvérisé à un brûleur attaché à la chaudière (10) ;
un système d'air secondaire pour fournir de l'air préchauffé pour la combustion à la chaudière (10) ; et
un dispositif de surchauffe d'air secondaire (7) prévu dans le système d'air secondaire, le dispositif de surchauffe d'air secondaire (7) assurant en outre une surchauffe de l'air préchauffé pour la combustion avec de l'énergie thermique solaire collectée par l'appareil de récupération de chaleur solaire.

2. Système d'utilisation de chaleur solaire selon la revendication 1, dans lequel le système d'air primaire inclut :
un ventilateur d'aspiration d'air primaire (25) pour générer de l'air destiné au transport qui permet de transporter par voie pneumatique du combustible fossile pulvérisé vers la chaudière (10) ;
un dispositif de chauffage d'air primaire (28) pour préchauffé l'air destiné au transport envoyé depuis le ventilateur d'aspiration d'air primaire (25) ;
dans lequel le système d'air secondaire inclut :
un ventilateur d'aspiration forcée (2) pour générer de l'air destiné à la combustion dans la chaudière (10) ; et
un dispositif de chauffage d'air secondaire (4) pour préchauffer l'air destiné à la combustion envoyé depuis le ventilateur d'aspiration forcée (2) ; dans lequel le dispositif de surchauffe d'air secondaire (7) est configuré pour surchauffer en outre l'air destiné à la combustion au niveau d'une sortie du dispositif de chauffage d'air secondaire (4) en utilisant l'énergie thermique solaire collectée par l'appareil de récupération de chaleur solaire à titre de source de chaleur.

3. Système d'utilisation de chaleur solaire selon la revendication 2, dans lequel l'appareil de récupération de chaleur solaire inclut :
une pluralité de miroirs de collecte de lumière solaire (35) pour collecter la lumière solaire ;
un échangeur de chaleur (47) pour soumettre un milieu thermique destiné au stockage de chaleur à un échange de chaleur avec un milieu chauffant, qui est chauffé par l'énergie thermique solaire collectée par les miroirs de collecte de lumière solaire (35) ;
un réservoir à basse température (51) pour stocker un milieu thermique à basse température destiné au stockage de chaleur utilisée pour l'échange de chaleur dans l'échangeur de chaleur (47) ;
un réservoir à haute température (52) pour stocker un milieu thermique à haute température destiné au stockage de chaleur chauffé dans l'échangeur de chaleur (47) ; et
une valve d'inversion pour commuter et permettre au milieu thermique destiné au stockage de chaleur de s'écouler à la fois vers le réservoir à basse température (51) et le réservoir à haute température (52).
